# EUROPEAN PATENT APPLICATION

(11) **EP 1 079 340 A2**
(43) Date of publication of application: **28.02.2001**
(21) Application number: 00117725.2
(22) Date of filing: 17.08.2000
(51) Int. Cl.: G07F 7/10

(54) **Integrated circuit card protected from unauthorized access**

(30) Priority: 19.08.1999 JP 23272899
(71) Applicant: NEC CORPORATION, Tokyo (JP)
(72) Inventor: Isogai, Hideo, c/o NEC Corporation, Tokyo (JP)
(74) Representative: Glawe, Delfs, Moll & Partner

(57) **Abstract**

An integrated circuit card includes a memory for storing a plurality of addresses associated with the commands and a plurality of passwords respectively associated with the commands, a status register; and control circuitry. The control circuitry is arranged to receive a command and a password associated therewith from an external device, and determine whether the memory stores an address associated with the received command and whether the memory stores a password associated with the received password. If the memory stores the corresponding address and password, the control circuitry determines whether the received command is to be inhibited or executed during one of a plurality of different phases of the integrated circuit card from manufacture to service. If the received command is to be inhibited, the control circuitry sets an inhibit indication in the status register and transmits information stored in the status register to the external device. If the received command is to be executed, the control circuitry performs a command program associated with the received command. Preferably, if the received command is to be inhibited, the control circuitry is further arranged to rewrite the address of the received command with an address of a substitute program before the inhibit indication is stored in said status register.

## Description

### BACKGROUND OF THE INVENTION

### Field of the Invention

The present invention relates to IC (integrated circuit) cards.

### Description of the Related Art

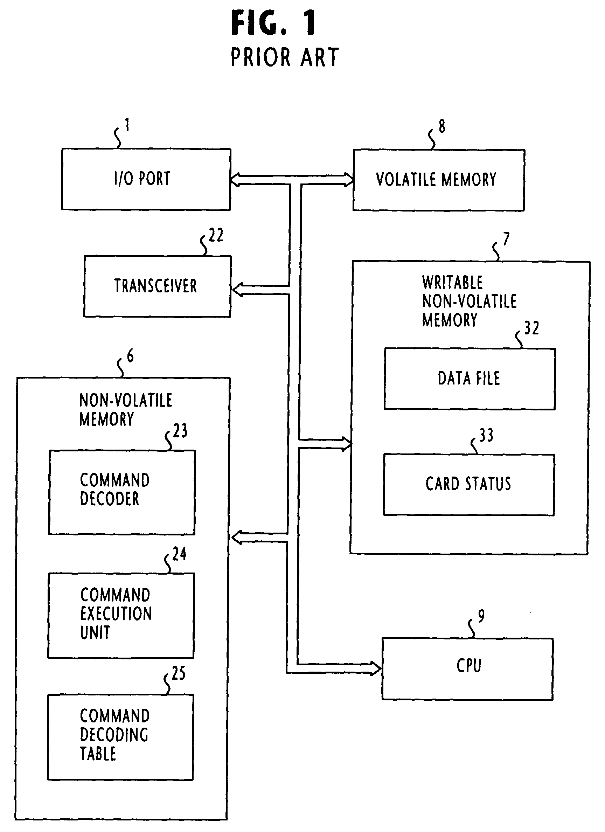

Conventional IC (integrated circuit) cards include, as shown in Fig. 1, an I/O port 1 that establishes communication with an external reader/writer, and memories of different types, i.e., a non-volatile memory 6, a writable non-volatile memory 7 and a volatile memory or work area 8. A transceiver 22 is provided for communication with the external reader/writer through the I/O interface. In the non-volatile memory 6, a plurality of circuits are defined, including a command decoder 23, a command execution unit 24 and a command decoding table 25. In the writable non-volatile memory 7 are defined a data file 32 for storing data (such as text, numbers, or graphics as distinct from those in a program file) that is written or read under control of an entered command. I/C port 1 and all memories of the IC card are connected to the central processing unit (CPU) 9. One method of verifying the ownership of the IC card is described in Japanese Laid-Open Patent Application 10-240891. According to this Application, the IC card receives a command from the external reader/writer and the entered command is identified by the command decoder 23 and then a password is entered through the reader/writer. If the password is verified, the identified command is executed by the command execution unit 24 and a status code is set up in the card, indicating that the entered password is legal. If the password is not verified, a status code is set up in the card indicating that the entered password is illegal, and no command execution is performed. As a response, the IC card returns the stored status code to the reader/writer. However, if the password of the IC card is illegally deciphered, an entered command will be executed and an unauthorized use of the card occurs.

According to another known verification method, a card status register 43 is defined in the writable non-volatile memory 7 for holding executable commands for manufacture, issue and service phases of a card. The card status register 43 is referenced to determine whether or not an entered command is executable and then a password is entered for verification. However, if inhibit control is desired for each of the stored commands, it is necessary to define a flag field for each command entry to set up a control flag or add a status lookup procedure to each command. This requires extra memory space. In addition, it is necessary to predetermine in which phase the command execution is inhibited. This prevents flexible use of the IC card.

### SUMMARY OF THE INVENTION

It is therefore an object of the present invention to provide an integrated circuit card that allows inhibit/execute control on a per-command basis for a different one of a plurality of phases of the card in order that the sensitive information of the IC card is protected on a per-command basis from unauthorized access.

According to the present invention, there is provided an integrated circuit card comprising a memory for storing a plurality of addresses associated with the commands and a plurality of passwords respectively associated with the commands, a status register; and control circuitry. The control circuitry is arranged to receive a command and a password associated therewith from an external device, and determine whether the memory stores an address associated with the received command and whether the memory stores a password associated with the received password. If the memory stores the corresponding address and password, the control circuitry determines whether the received command is to be inhibited or executed during one of a plurality of different phases of the integrated circuit card from manufacture to service. If the received command is to be inhibited, the control circuitry sets an inhibit indication in the status register and transmits information stored in the status register to the external device. If the received command is to be executed, the control circuitry performs a command program associated with the received command. Preferably, if the received command is to be inhibited, the control circuitry is further arranged to rewrite the address of the received command with an address of a substitute program before the inhibit indication is stored in said status register.

### BRIEF DESCRIPTION OF THE DRAWINGS

The present invention will be described in further detail with reference to the accompanying drawings, in which:
Fig. 1 is a block diagram of a prior art IC card;
Fig. 2 is a block diagram of an IC card according to the present invention;
Fig. 3 is an illustration of the detail of the command decoding table of Fig. 1;
Fig. 4 is a flowchart of the operation of the IC card according to one embodiment of the present invention;
Fig. 5 is a flowchart of a modified embodiment of the present invention; and
Fig. 6 is a flowchart of a further modification of the present invention.

### DETAILED DESCRIPTION

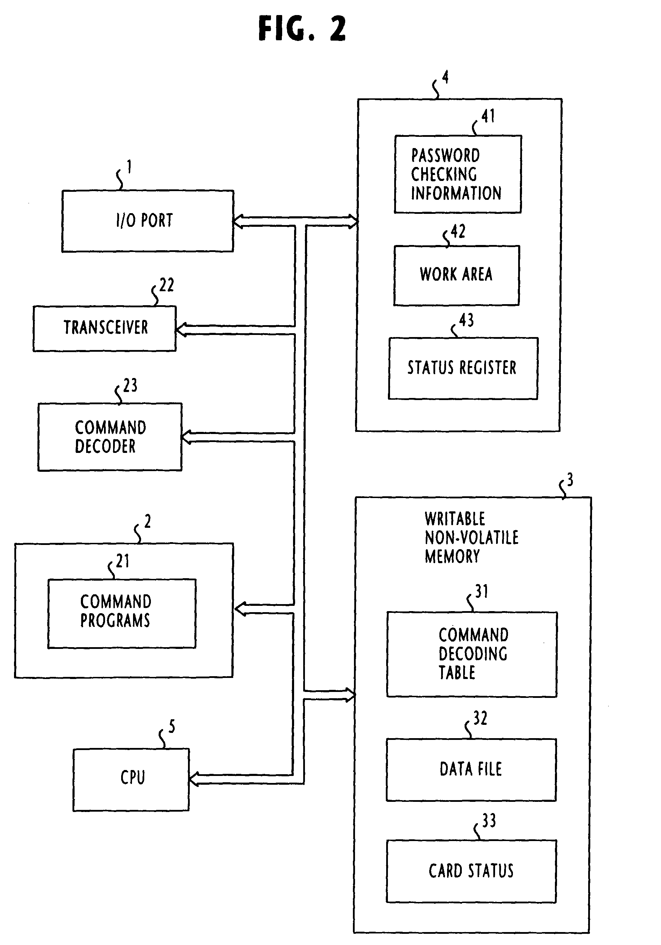

Referring now to Fig. 2, there is shown an IC card according to the present invention. The IC card of this invention differs from the prior art IC card in that it includes a non-volatile memory 2, a writable non-volatile memory 3 and a volatile memory 4 in which a status register 43 is provided in addition to the password memory 41 and work area 42. The non-volatile memory 2 defines a memory area for storing a plurality of command programs 21.

In the writable non-volatile memory 3, a command decoding table 31, a data file 32 and a card status memory 33are provided. Volatile memory 4 defines an area for storing password check information 41 and a work area 42.

Card status memory 33 indicates which one of different phases the IC card is currently in. These phases include manufacture, issue, shipment and service. Additionally, the memory 33 has a plurality of entries that are associated respectively with different commands for mapping the commands to execute/inhibit indications which indicate during the shipment phase whether the respective commands are to be executed or inhibited.

CPU 5 is connected to the I/O port 1 and all memories to receive signals and programmed data to operate and give appropriate instructions to various parts of the IC card.

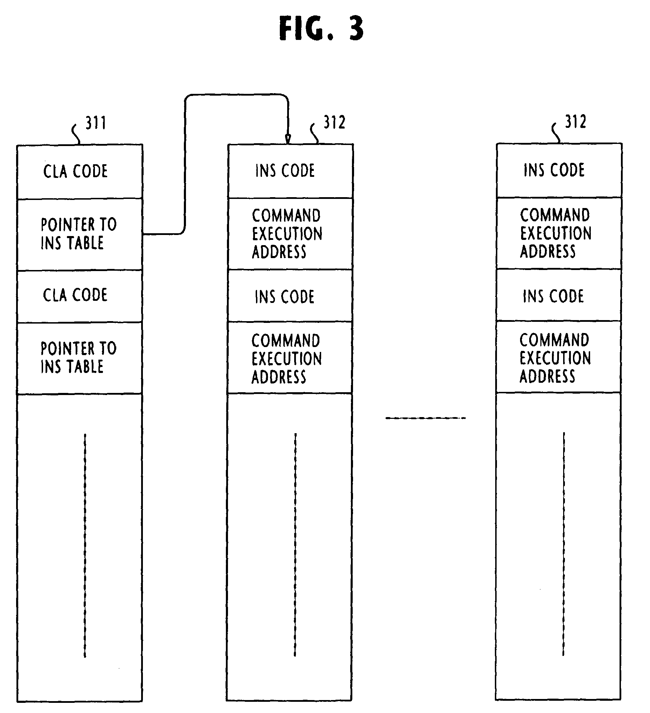

As illustrated in Fig. 3, the command decoding table 31 is partitioned into a CLA (class) table 311 and a plurality of INS (instructions) tables 312. The CLA table 311 stores a plurality of CLA codes and a corresponding number of INS table pointers for mapping respective commands to corresponding INS tables 312. Each INS table 312 stores a plurality of INS codes and a corresponding number of command execution address information.

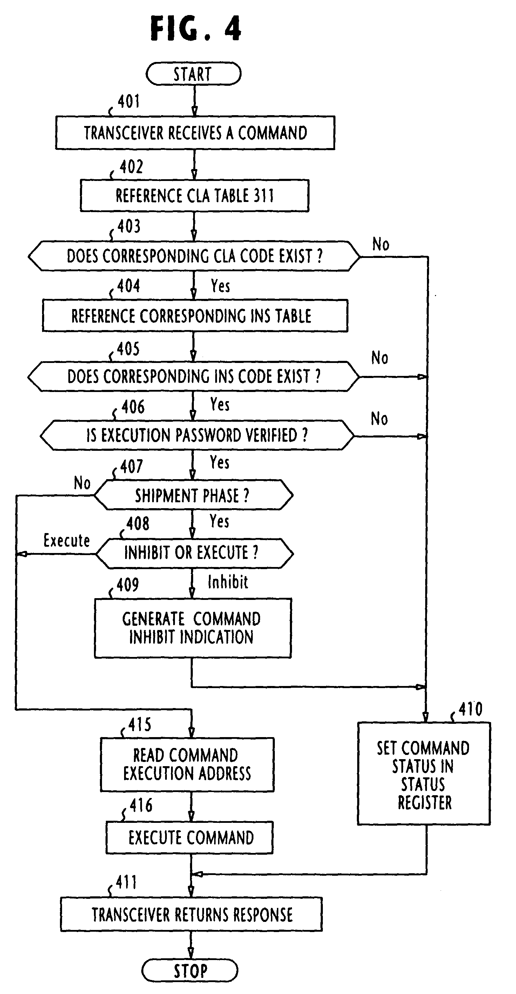

A command execution routine of the IC card is shown in the flowchart of Fig. 4. When the transceiver unit 22 receives each of a series commands from an external reader/writer (block 401), the command decoder 23 is instructed by the CPU 5 to reference the CLA table 311 of the command decoding table 31 (block 402) and determines whether there is a corresponding CLA code (block 403). If the decision in block 403 is negative, the command decoder 23 stores command status information in the status register 43, indicating that the entered command has no corresponding CLA code (block 410). In subsequent block 411, the transceiver unit 22 transmits this command status information to the reader/writer and terminates the routine.

If a CLA code associated with the entered command exists, the decision in block 403 is affirmative and the CPU 5 references one of the INS tables that corresponds to that CLA code and searches for a corresponding INS code (blocks 404, 405). If there is no corresponding INS code, the decision in block 405 is negative and blocks 409 and 410 are executed.

If there is an INS code associated with the entered command, the decision in block 405 is affirmative and the routine proceeds to decision block 406 to check the execution password of the entered command with passwords stored in memory 41 for verification. If the password is not verified in block 406, command status information is stored in the status register 43, indicating that the password is not verified (block 410).

If the password is verified in block 406, block 407 is then executed by determining whether the current phase is the shipment phase. If not, the routine proceeds to block 415 to read a command execution address from one of the INS tables 312 of the command decoding table 31 and the program of the entered command is executed and an indication that the entered command has been executed is set in the command status register 43 (block 416) and the routine proceeds to block 411. A response is then returned from the transceiver to the external reader/writer for indicating the contents of the status register 43.

If the current phase is the shipment phase, the routine proceeds from block 407 to block 408 to reference the card status memory 33 and determines whether the entered command is to be executed or inhibited. If an "execute" indication is stored in the entry of the card status memory 33 associated with the received command, control proceeds from block 408 to block 415. If an "inhibit" indication is stored in that entry, the routine proceeds to block 409 and generates a command inhibit indication that the current command is a non-executable command and stores it in the status register 43 (block 410). The received command is thus not executed and the transceiver 22 transmits this inhibited command status to the reader/writer.

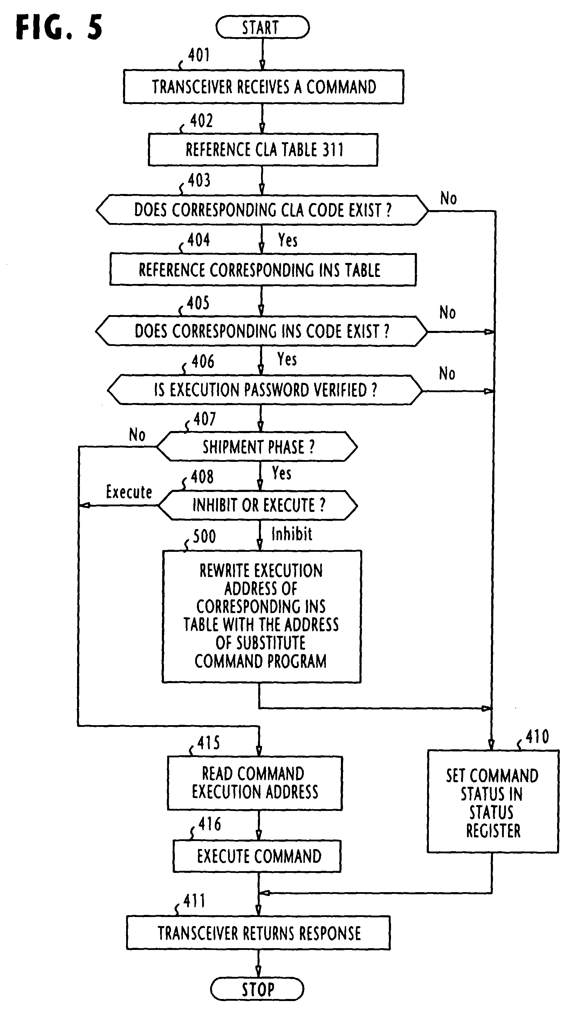

A modification of the embodiment of Fig. 4 is shown in Fig. 5 in which parts corresponding to those in Fig. 4 are identified by the same numerals as those used in Fig. 4. In Fig. 5, block 409 of Fig. 4 is replaced with block 500. In block 500, the CPU 5 accesses the command execution address of one of the INS tables 312 that corresponds to the currently received command and rewrites it with the address of a substitute command execution program stored in the program memory 21. Thus, the current command is not executed. The routine proceeds to block 410 to store command status information in the status register 43 indicating that the current command is a non-executable command.

When the IC card is used later in its service phase and a series of command is entered, the routine of Fig. 5 will be executed and the substitute address will be read in block 415 and the associated substitute command program is executed in block 416. The user is then informed of the fact that the entered command is a non-executable command.

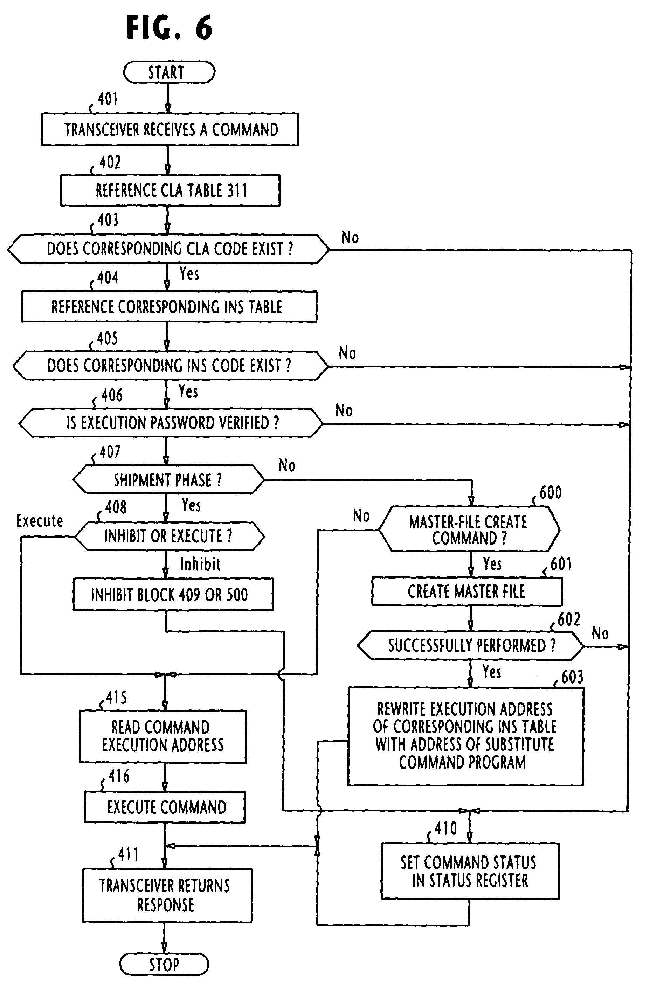

The present invention is useful for limiting the execution of a command of the type, such as master file (MF) creation command, that is to be performed only once during the lifetime of an IC card. This can be implemented by modifying the flowchart of Fig. 4 or 5 as shown in Fig. 6 in which same numerals are used to designate those having the same significance in Figs 4 and 5.

If the decision in block 407 indicates that the current phase is other than the shipment phase, control proceeds to block 600 to determine whether the received command is a master-file-create command. If not, flow proceeds to step 415 to execute the current command. If the current command is a master-file-create command, the routine proceeds to block 601 to perform a master-file creation process. If this process is successfully performed (block 602), the CPU 5 proceeds to block 603 to access one of the INS tables 312 in which the execution address of the master-file creation command is stored and rewrites this address with the address of a substitute command program. As a result, the master-file create command is no longer executed. When the card is used in the service phase, the input of the same command to the card will result in the execution of the substitute command associated with the rewritten address and a response is returned to the user indicating that the master-file create command is a non-executable command.

If processes of the type that is to be performed only during manufacture and issue phases of an IC card (such as file creation and deletion) are performed during service phase, the important data of the IC card may be subject to unauthorized access. Since the present invention provides inhibit control of an IC card on a per-command basis, card protection control can be precisely and efficiently provided according to different phases of the card.

## Claims

1. An integrated circuit card comprising:
a memory for storing a plurality of addresses associated with the commands and a plurality of passwords respectively associated with the commands;
a status register; and
control circuitry which is arranged to:
receive a command and a password associated therewith from an external device;
determine whether the memory stores an address associated with the received command and whether the memory stores a password associated with the received password;
if the memory stores the corresponding address and password, determine whether the received command is to be inhibited or executed during one of a plurality of different phases of the integrated circuit card from manufacture to service;
if the received command is to be inhibited, set an inhibit indication in the status register and transmit information stored in said status register to the external device; and
if the received command is to be executed, perform a command program associated with the received command.

2. The integrated circuit card of claim 1, wherein the control circuitry is further arranged to rewrite said corresponding address with an address of a substitute program, if the received command is to be inhibited, before said inhibit indication is stored in said status register.

3. The integrated circuit card of claim 1, wherein the control circuitry is further arranged to perform a command program of the received command if the received command is a predetermined one and rewrite an address associated with the received command with an address of a substitute program.

4. The integrated circuit card of claim 3, wherein the received command is a master-file-create command.

5. A method of controlling each of a series of commands entered from an external device to an integrated circuit card, the card having a memory for storing a plurality of addresses associated with said commands and a plurality of passwords respectively associated with said commands, and a status register, comprising the steps of:
a) receiving a command and a password associated therewith, from said external device;
b) determining whether said memory stores an address associated with the received command and a password associated with the received password;
c) if said memory stores the corresponding address and password, determining whether the received command is to be inhibited or executed during one of a plurality of different phases of the integrated circuit card from manufacture to service;
d) if the received command is to be inhibited, setting an inhibit indication in said status register and transmitting information stored in said status register to the external device; and
e) if the received command is to be executed, performing a command program associated with the received command.

6. The method of claim 5, wherein the step (d) additionally comprises the step of rewriting said corresponding address with an address of a substitute program before said inhibit indication is stored in said status register.

7. The method of claim 5, further comprising the steps of performing a program of the received command if the received command is a predetermined one and rewriting an address associated with the received command with an address of a substitute program.

8. The method of claim 7, wherein the received command is a master-file-create command.

9. A storage medium for storing a computer-executable program that operates an integrated circuit card, the program comprising the steps of:
a) receiving a command and a password associated therewith from an external device;
b) determining whether said memory stores an address associated with the received command and a password associated with the received password;
c) if said memory stores the corresponding address and password, determining whether the received command is to be inhibited or executed during one of a plurality of different phases of the integrated circuit card from manufacture to service;
d) if the received command is to be inhibited, setting an inhibit indication in said status register and transmitting information stored in said status register to the external device; and
e) if the received command is to be executed, performing a command program associated with the received command.

10. The storage medium of claim 9, wherein the step (e) additionally comprises the step of rewriting said corresponding address with an address of a substitute program before said inhibit indication is stored in said status register.

11. The storage medium of claim 9, further comprising the steps of performing a program of the received command if the received command is a predetermined one and rewriting an address associated with the received command with an address of a substitute program.

12. The storage medium of claim 11, wherein the received command is a master-file-create command.
